# EUROPEAN PATENT APPLICATION

(11) **EP 2 530 301 A1**
(43) Date of publication of application: **05.12.2012**
(21) Application number: 11380047.8
(22) Date of filing: 31.05.2011
(51) Int. Cl.: F03D 1/06

(54) **Blade root stiffening element and method of mounting a blade having said root stiffening element**

(71) Applicant: General Electric Company, Schenectady, NY 12345 (US)
(72) Inventor: Calle Garrido, Alvaro Jaime, 28032 Madrid (ES); Bartolome Lopez, Miguel, 28300 Madrid (ES); Benito Santiago, Pedro Luis, 28933 Mostoles (ES); Yegro Segovia, Eugenio, 28979 Serranillos del Valle (ES)
(74) Representative: Bedford, Grant Richard

(57) **Abstract**

A rotor blade adapted for use with a rotor of a wind turbine is provided. The rotor blade (22) includes: (a) a blade root portion (24) adapted for, in use, transferring a load acting on the blade (22) to the rotor (18) through a blade coupling assembly (92) of the rotor (18). The blade coupling assembly (92) includes a rotatable hub and a pitch bearing. The rotor blade (22) further includes: (b) at least one reinforcement element disposed in the blade root portion (24) of the rotor blade (22) for stiffening the blade coupling assembly (92) of the rotor. Furthermore, a wind turbine (10) including the above rotor blade (22) and a method of assembling the wind turbine (10) are provided.

## Description

### BACKGROUND OF THE INVENTION

The subject matter described herein relates, typically, to methods and systems for assembling a wind turbine including a pitch bearing and, more particularly, to methods and systems for assembling a rotor blade to a wind turbine through a blade coupling assembly including at least one pitch bearing.

Wind turbines typically include a tower and a nacelle mounted on the tower. A rotor is rotatably mounted to the nacelle and is coupled to a generator by a shaft. A plurality of blades extends from the rotor. The blades are oriented such that wind passing over the blades turns the rotor and rotates the shaft, thereby driving the generator to generate electricity.

The plurality of blades may be coupled to the rotor through a blade coupling assembly. Typically, the blade coupling assembly includes, at least, a rotatable hub and a pitch assembly. The pitch assembly may include a plurality of pitch bearings coupled to the hub and to respective blades. Thereby, the blades may rotate about respective pitch axes. In particular, the pitch bearings may allow varying the angle of attack of the blades relative to impinging wind. Varying the blade angle is also referred to as blade pitching. By pitching of the blades, at least some variables of the wind turbine may be adjusted, such as, but not limited to, rotation speed of the rotor and/or power generated by the wind turbine.

During the operation of wind turbines, the plurality of blades may generate loads on the blade coupling assembly that cause distortions in elements thereof. In particular, blade loads may cause distortions in the rotor hub and/or pitch bearings. These distortions might induce damage of the blade coupling assembly or, under particularly harsh conditions, even irreparably damage the assembly. Therefore, the blade coupling assembly may require periodical inspections for checking damage on the pitch bearings, the rotor hub, or other elements in the blade coupling assembly.

For reducing distortions in the blade coupling assembly, some of its components may be manufactured more robust. For example, the size of the pitch bearings and the rotor hub may be increased. Additionally, these components may be fabricated using high quality materials or manufacturing processes, which facilitate increasing stiffness of the blade coupling assembly. However, such adaptation of elements in the coupling assembly may significantly increase costs in the fabrication of wind turbines. Alternatively, an additional element may be provided in the blade coupling assembly for stiffening thereof. For example, an additional flange may be fastened to the pitch bearings in order to stiffen the blade coupling assembly.

However, it is still desirable to provide systems and/or methods for conveniently reducing distortions of a blade coupling assembly for coupling a blade to the rotor.

### BRIEF DESCRIPTION OF THE INVENTION

In one aspect, a rotor blade is provided. The rotor blade is adapted for use with a rotor of a wind turbine. The rotor blade includes: (a) a blade root portion adapted for, in use, transferring a load acting on the blade to the rotor through a blade coupling assembly of the rotor. The blade coupling assembly includes a rotatable hub and a pitch bearing. The rotor blade further includes: (b) at least one reinforcement element disposed in the blade root portion of the rotor blade for stiffening the blade coupling assembly of the rotor.

In another aspect, a wind turbine is provided. The wind turbine includes: (a) a tower; (b) a nacelle coupled to the tower; (c) a rotor rotatably coupled to the nacelle, the rotor including a blade coupling assembly including a rotor hub and at least one pitch bearing coupled to the rotor hub; and, (d) at least one rotor blade coupled to the rotor hub through the at least one pitch bearing at a blade root portion, so that the at least one rotor blade is rotatable about a pitch axis. The at least one rotor blade includes at least one reinforcement element disposed in the blade root portion such that the at least one reinforcement element stiffens the blade coupling assembly.

In yet another aspect, a method of assembling a wind turbine with a rotor is provided. The rotor includes a rotor hub and at least one pitch bearing coupled to the rotor hub. The rotor hub and the at least one pitch bearing form part of a blade coupling assembly for coupling at least one rotor blade to the rotor. The assembly method includes coupling one of the at least one rotor blade to the rotor hub through a pitch bearing, so that the at least one rotor blade is rotatable about a pitch axis. At least one reinforcement element is disposed in the blade root portion. The at least one reinforcement element stiffens the blade coupling assembly, when the at least one rotor blade is coupled to the rotor hub.

By including a reinforcement element disposed in the blade root portion, the embodiments described herein may facilitate conveniently decreasing distortion of elements in the blade coupling assembly such as, but not limited to, the rotor hub and/or the pitch bearing(s). In particular, typical embodiments herein may facilitate reinforcing the blade portion to be attached to the blade coupling assembly, so that this blade portion is less prone to deformations. Typically, such deformation might lead to distortions of elements in the blade coupling assembly. Thereby, embodiments herein may facilitate an effective stiffening of the blade coupling assembly without requiring the provision of additional elements therein or redesign of the rotor hub or the pitch bearing(s).

Further aspects, advantages and features of the present invention are apparent from the dependent claims, the description and the accompanying drawings.

### BRIEF DESCRIPTION OF THE DRAWINGS

A full and enabling disclosure including the best mode thereof, to one of ordinary skill in the art is set forth more particularly in the remainder of the specification, including reference to the accompanying figures wherein:

Figure 1 is a perspective view of an exemplary wind turbine;

Figure 2 is an enlarged sectional view of a portion of the wind turbine shown in Figure 1;

Figure 3 is an enlarged view of another portion of the wind turbine shown in Figure 1;

Figure 4 is an enlarged sectional view of another portion of the wind turbine shown in Figure 1;

Figure 5 is a perspective view of a blade for the wind turbine shown in Figure 1;

Figure 6 is an enlarged sectional view of another portion of the wind turbine shown in Figure 1 including an exemplary reinforcement element;

Figure 7 is an enlarged sectional view of the wind turbine shown in Figure 1 including another exemplary reinforcement element;

Figure 8 is an enlarged sectional view of the wind turbine shown in Figure 1 including another exemplary reinforcement element;

Figure 9 is a perspective view of an exemplary reinforcement element for use with a blade of the wind turbine in Figure 1; and,

Figure 10 is a perspective view of an exemplary reinforcement element for use with a blade of the wind turbine in Figure 1.

### DETAILED DESCRIPTION OF THE INVENTION

Reference will now be made in detail to the various embodiments, one or more examples of which are illustrated in each figure. Each example is provided by way of explanation and is not meant as a limitation. For example, features illustrated or described as part of one embodiment can be used on or in conjunction with at least some embodiments to yield yet further embodiments. It is intended that the present disclosure includes such modifications and variations.

At least some solutions previously proposed for reducing distortions of a blade coupling assembly may not be entirely satisfactory. For example, designing the elements of the blade coupling assembly, such as, but not limited to, the rotor hub and/or pitch bearing, for reducing distortions, as currently proposed, may imply using of too costly materials or increasing the size of these elements. For some particular applications, the cost increase implied may not be economically feasible. Furthermore, a size increase of components in the blade coupling assembly may compromise performance of the wind turbine and/or further increment the costs.

Further, providing additional elements in the blade coupling assembly for stiffening thereof may be insufficient for sufficiently reducing distortions of the assembly. Moreover, the provision of at least some of the known additional elements in the coupling assembly may imply costly redesign of elements therein such as, for example, the rotor hub and/or pitch bearings. Furthermore, such additional elements added to the coupling assembly may add complexity to the assembly and servicing of the wind turbine, so that providing such additional elements in the coupling assembly may be prone to errors by the personal in charge of the wind turbine assembly. Thereby, the provision of such additional elements may even promote distortions of the blade coupling assembly during operation of the wind turbine.

The present inventors have recognized that elastic deformations of the blade root portion may significantly contribute to distortions of the blade coupling assembly. A reinforcement element disposed in a blade root portion according to embodiments herein may be particularly suitable for reducing these elastic deformations of the blade root portion. Thereby, it is facilitated conveniently stiffening the blade coupling assembly or, more particularly, decreasing distortions thereof. As an example, such a reinforcement element may be a flange such as a flange integrated in a blade root portion.

In particular, according to embodiments herein, a reinforcement element is disposed in the blade root portion for stiffening the blade coupling assembly. It should be noted that, in contrast to at least some of the proposed solutions described above, embodiments herein typically facilitate reducing distortions of elements of the blade coupling assembly without necessarily having to modify the structure of the coupling assembly, e.g., by addition of stiffening elements thereto.

As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power. According to embodiments herein, a blade root portion is the portion of the rotor blade configured for being disposed proximal to the rotor. In particular, the blade root portion may be configured to, in use, transfer loads acting on a rotor blade to the rotor. According to embodiments herein, a blade coupling assembly is an assembly disposed in the rotor for coupling a blade to the rotor. Typically, the blade coupling assembly includes, at least, a rotatory hub and a pitch assembly with one pitch bearing for each blade of the wind turbine.

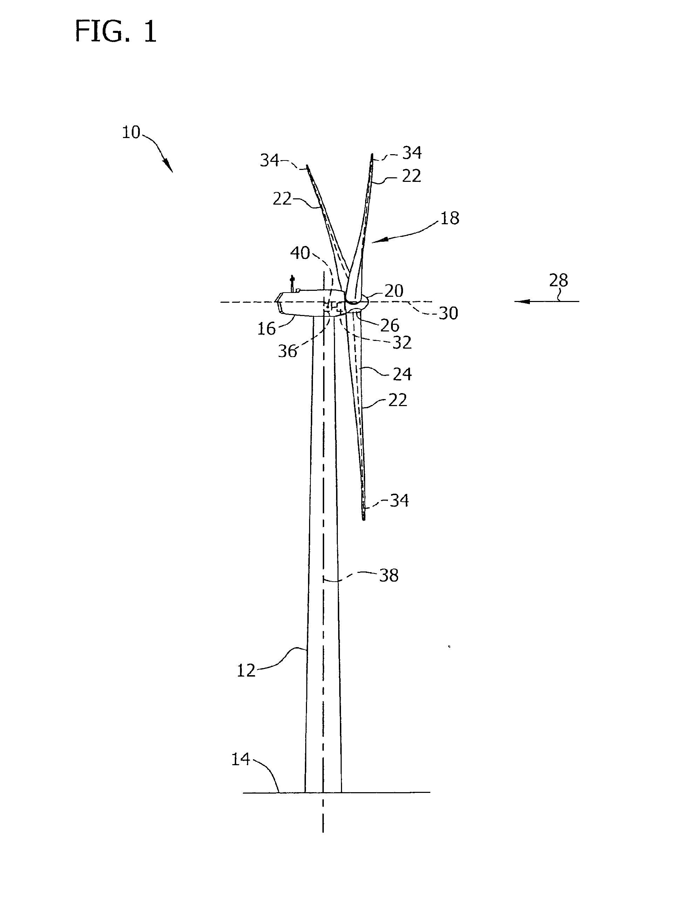

Figure 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support system 14, a nacelle 16 mounted on tower 12, and a rotor 18 that is coupled to nacelle 16. Rotor 18 includes a rotatable hub 20 and at least one rotor blade 22 coupled to and extending outward from hub 20. In the exemplary embodiment, rotor 18 has three rotor blades 22. In an alternative embodiment, rotor 18 includes more or less than three rotor blades 22. In the exemplary embodiment, tower 12 is fabricated from tubular steel to define a cavity (not shown in Figure 1) between support system 14 and nacelle 16. In an alternative embodiment, tower 12 is any suitable type of tower having any suitable height.

Rotor blades 22 are spaced about hub 20 to facilitate rotating rotor 18. Rotor blades 22 are adapted and configured to enable kinetic energy to be transferred from the wind into usable mechanical energy, and subsequently, electrical energy. Rotor blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to rotor blades 22 are transferred to hub 20 via load transfer regions 26. According to typical embodiments herein, the load transfer regions 26 include blade coupling assemblies 92 for coupling rotor blade 22 to rotor 18, as further detailed below.

In one embodiment, rotor blades 22 have a length ranging from about 15 meters (m) to about 91 m. Alternatively, rotor blades 22 may have any suitable length that enables wind turbine 10 to function as described herein. For example, other non-limiting examples of blade lengths include 10 m or less, 20 m, 37 m, or a length that is greater than 91 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or nondeflected, position to a deflected position.

Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors. Pitch axes 34 for rotor blades 22 are shown. During operation of wind turbine 10, pitch adjustment system 32 may change a blade pitch of rotor blades 22 such that rotor blades 22 are moved to a feathered position, such that the perspective of at least one rotor blade 22 relative to wind vectors provides a minimal surface area of rotor blade 22 to be oriented towards the wind vectors, which facilitates reducing a rotational speed of rotor 18 and/or facilitates a stall of rotor 18.

In the exemplary embodiment, a blade pitch of each rotor blade 22 is controlled individually by a control system 36. Alternatively, the blade pitch for all rotor blades 22 may be controlled simultaneously by control system 36. Further, in the exemplary embodiment, as direction 28 changes, a yaw direction of nacelle 16 may be controlled about a yaw axis 38 to position rotor blades 22 with respect to direction 28.

In the exemplary embodiment, control system 36 is shown as being centralized within nacelle 16, however, control system 36 may be a distributed system throughout wind turbine 10, on support system 14, within a wind farm, and/or at a remote control center. Control system 36 includes a processor 40 configured to perform the methods and/or steps described herein.

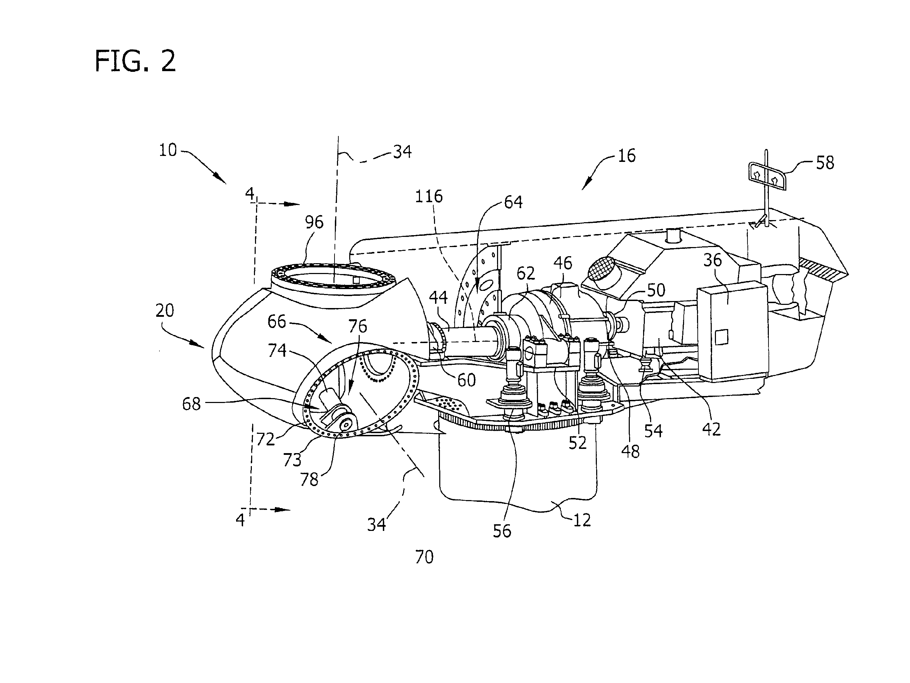

Figure 2 is an enlarged sectional view of a portion of wind turbine 10. In the exemplary embodiment, wind turbine 10 includes nacelle 16 and hub 20 that is rotatably coupled to nacelle 16. More specifically, hub 20 is rotatably coupled to an electric generator 42 positioned within nacelle 16 by rotor shaft 44 (sometimes referred to as either a main shaft or a low speed shaft), a gearbox 46, a high speed shaft 48, and a coupling 50. In the exemplary embodiment, rotor shaft 44 is disposed coaxial to longitudinal axis 116. Rotation of rotor shaft 44 rotatably drives gearbox 46 that subsequently drives high speed shaft 48. High speed shaft 48 rotatably drives generator 42 with coupling 50 and rotation of high speed shaft 48 facilitates production of electrical power by generator 42. Gearbox 46 and generator 42 are supported by a support 52 and a support 54. In the exemplary embodiment, gearbox 46 utilizes a dual path geometry to drive high speed shaft 48. Alternatively, rotor shaft 44 is coupled directly to generator 42 with coupling 50.

Nacelle 16 also includes a yaw drive mechanism 56 that may be used to rotate nacelle 16 and hub 20 on yaw axis 38 (shown in Figure 1) to control the perspective of rotor blades 22 with respect to direction 28 of the wind. Nacelle 16 also includes at least one meteorological mast 58 that includes a wind vane and anemometer (neither shown in Figure 2). Mast 58 provides information to control system 36 that may include wind direction and/or wind speed. In the exemplary embodiment, nacelle 16 also includes a main forward support bearing 60 and a main aft support bearing 62.

Forward support bearing 60 and aft support bearing 62 facilitate radial support and alignment of rotor shaft 44. Forward support bearing 60 is coupled to rotor shaft 44 near hub 20. Aft support bearing 62 is positioned on rotor shaft 44 near gearbox 46 and/or generator 42. Alternatively, nacelle 16 includes any number of support bearings that enable wind turbine 10 to function as disclosed herein. Rotor shaft 44, generator 42, gearbox 46, high speed shaft 48, coupling 50, and any associated fastening, support, and/or securing device including, but not limited to, support 52 and/or support 54, and forward support bearing 60 and aft support bearing 62, are sometimes referred to as a drive train 64. As mentioned above, drive train 64 may be configured as a direct-drive train.

In the exemplary embodiment, hub 20 includes a pitch assembly 66. Pitch assembly 66 may include one or more pitch drive systems 68. Each pitch drive system 68 is coupled to a respective rotor blade 22 (shown in Figure 1) for modulating the blade pitch of associated rotor blade 22 along pitch axis 34. Only one of three pitch drive systems 68 is shown in Figure 2.

In the exemplary embodiment, pitch assembly 66 includes pitch bearings 96 coupled to hub 20. Hub 20 typically includes pitch bearing couplings 72 for coupling of pitch bearings 96 to hub 20 through suitable fastening devices, such as threads 73. Wind turbine 10 may include a pitch bearing 96 for each of rotor blades 22. For better understanding, Figure 2 shows only one pitch bearing 96 mounted onto hub 20 (shown in the upper portion of hub 20) and one free pitch bearing coupling 72 (shown in the bottom portion of hub 20). Pitch drive system 68 may include a pitch drive motor 74, pitch drive gearbox 76, and pitch drive pinion 78. Pitch drive motor 74 may be coupled to pitch drive gearbox 76 such that pitch drive motor 74 imparts mechanical force to pitch drive gearbox 76. Pitch drive gearbox 76 may be coupled to pitch drive pinion 78 such that pitch drive pinion 78 is rotated by pitch drive gearbox 76.

Pitch drive system 68 is coupled to control system 36 for adjusting the blade pitch of rotor blade 22 upon receipt of one or more signals from control system 36. In the exemplary embodiment, pitch drive motor 74 is any suitable motor driven by electrical power and/or a hydraulic system that enables pitch assembly 66 to function as described herein. Alternatively, pitch assembly 66 may include any suitable structure, configuration, arrangement, and/or components such as, but not limited to, hydraulic cylinders, springs, and/or servo-mechanisms. Moreover, pitch assembly 66 may be driven by any suitable means such as, but not limited to, hydraulic fluid, and/or mechanical power, such as, but not limited to, induced spring forces and/or electromagnetic forces. In certain embodiments, pitch drive motor 74 is driven by energy extracted from a rotational inertia of hub 20 and/or a stored energy source (not shown) that supplies energy to components of wind turbine 10.

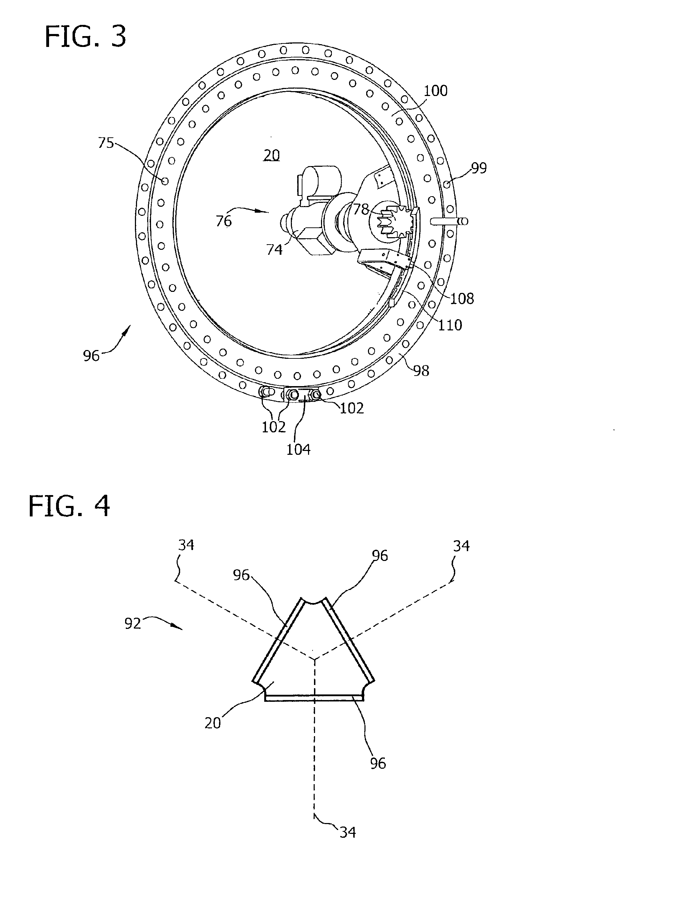

Figure 3 is another enlarged sectional view of a portion of wind turbine 10 depicting a pitch bearing 96. Typically, pitch bearing 96 includes a pitch bearing outer ring 98 adapted to be fixed to hub 20. For example, a plurality of bolts or screws 102 may be disposed through holes 99 of pitch bearing outer ring 98 and fastened to threads 73 of pitch bearing coupling 72 (see Fig. 2) in collaboration with nuts (not shown). Bolts or screws 102 may be coupled to each other by hub-bearing stiffeners 104 for increasing stiffness of the pitch bearing 96.

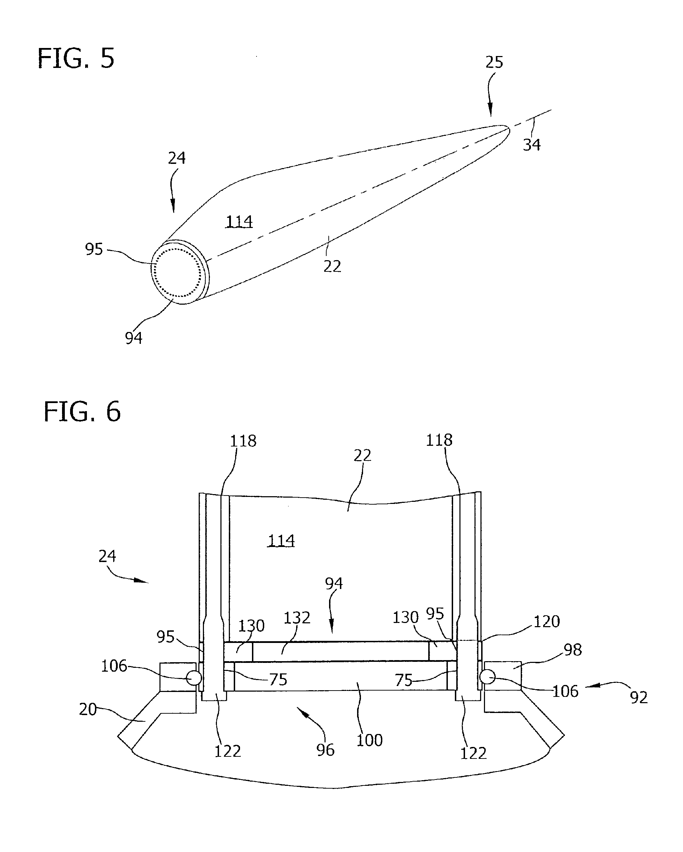

Typically, pitch bearing 96 further includes a pitch bearing inner ring 100 rotatably mounted within pitch bearing outer ring 98. Typically, rolling elements 106 (shown in Figures 6 to 8) are disposed between outer ring 98 and inner ring 100 for enabling rotation of inner ring 100. According to typical embodiments, inner ring 100 is adapted for enabling coupling of respective rotor blade 22 thereto. For example, inner ring 100 may include a plurality of holes 75 adapted to enable fastening of respective rotor blade 22 to inner ring 100 through a plurality of nuts or screws (not shown). Inner ring 100 may include any other suitable devices for enabling fastening of a rotor blade 22 to pitch bearing 96.

Pitch bearing 96 is coupled to hub 20 and to respective rotor blade 22 (shown in Figure 1) for enabling rotation of respective rotor blade 22 about pitch axis 34. For example, pitch drive pinion 78 may be coupled to pitch bearing 96 such that the rotation of pitch drive pinion 78 causes rotation of inner ring 100. In the exemplary embodiment, a control cam 110 is connected to inner ring 100 for enabling rotation thereof. In particular, pitch drive motor 74 may be actuated for causing pitch drive pinion 78 to rotate. Since drive pinion 78 meshes control cam 110, rotation of drive pinion 78 causes inner ring 100 to turn. Pitch bearing 96 may include a limit switch 108, which is activated by control cam 110.

Figure 4 shows a blade coupling assembly 92 of wind turbine 10. Blade coupling assembly 92 is adapted for enabling coupling of rotor blades 22 to rotor 18 of wind turbine 10. In the exemplary embodiment, and at least some embodiments herein, blade coupling assembly 92 includes rotor hub 20 and a pitch bearing assembly constituted by pitch bearings 96. In the exemplary embodiment, and at least some embodiments herein, the pitch assembly includes one or more pitch bearings 96, each of pitch bearings 96 being associated to a respective blade 22.

According to at least some embodiments, blade coupling assembly 92 includes further elements such as, but not limited to, one or more flanges coupled to pitch bearing 96 for stiffening of assembly 96. For example, assembly 92 may include a stiffening flange (not shown) coupled to a pitch bearing 92 and rotor hub 20. Alternatively or in addition thereto, assembly 92 may include a stiffening flange coupled to a pitch bearing 96 and to a respective blade 22.

Figure 5 is a perspective view of a rotor blade 22 according to embodiments herein. The exemplary rotor blade 22 is adapted for use with rotor 18 of wind turbine 10. Rotor blade 22 includes a blade main body 114, a blade root portion 24 and a free end portion 25. Blade root portion 24 is configured as the portion of rotor blade 22 proximal to rotor hub 20, when rotor blade 22 is mounted on wind turbine 10. Free end portion 25 is configured as the portion of rotor blade 22 distal to hub 20, when rotor blade 22 is mounted on wind turbine 10.

Rotor blade 22 further includes a reinforcement element 94. According to at least some embodiments herein, reinforcement element 94 is integrally formed in blade root portion 24. That is, reinforcement element 94 may be an integral portion of main body 114 of blade 22, such that element 94 and main body 114 are formed as one piece. In addition thereto, reinforcement element 94 may be integrally formed in blade root portion 24 by providing, in root portion 24, a piece not forming part of main body 114 but fastened thereto, so that reinforcement element 94 substantially completes the shape of main body 114, as exemplarily shown in Figure 5. As a further example, reinforcement element 94 may be provided as a flange completing main body 114 of rotor blade 22.

Reinforcement element 94 may be attached to main body 114 by, for example, using an appropriate epoxy. Alternatively, reinforcement element 94 may be adapted for being fastened to main body 114 of rotor blade 22 by fastening devices, such as a plurality of bolts or screws. In at least some embodiments, reinforcement element 94 may be coupled to main body 114 of rotor blade 22 by welding, in particular when reinforcement element 94 and the portion of body 114 configured to be coupled thereto are comprised of weldable materials such as, but not limited to, steel or aluminum.

According to at least some embodiments, reinforcement element 94 may be a portion of the main body of blade 22, which has been reinforced at the time of manufacturing blade 22. For example, a region of blade root portion 24 may be reinforced with respect to other areas of blade main body 114 during manufacturing. In particular, the density of the manufacturing material at a pre-determined area of blade root portion 24 may be increased for reinforcement thereof. Alternatively or in addition thereto, such reinforcement may be implemented by introduction of an additional piece, such as a flange, in the blade root portion at the time of manufacturing the blade.

According to at least some embodiments herein, the reinforcement element is integrally formed in a blade root portion, such that the reinforcement element is constituted by a piece formed separately from the main body of the rotor blade but attached thereto at the blade root portion in a fixed manner. In particular, the reinforcement element may be formed as a separate piece, which is designed for completing the body of the blade root portion. In particular, the reinforcement element may be attached at the blade root portion as an additional portion thereof. For example, the reinforcement element may be a flange integrated in the blade root portion. As another example, the reinforcement element may be a flange fixed at an end section of blade root portion.

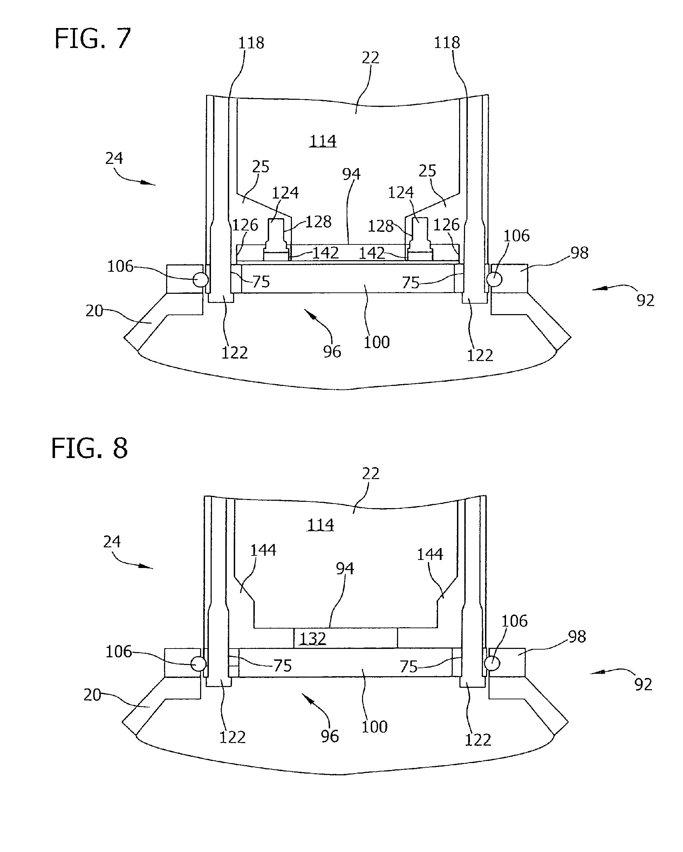

Reinforcement element 94 may be disposed for forming the boundary of blade root portion 24 configured to be disposed proximal to blade coupling assembly 92 when rotor blade 22 is mounted on wind turbine 10. For example, in the exemplary embodiment, and at least some embodiments according to the present disclosure, reinforcement element 94 is disposed in blade root portion 24 such that that reinforcement element 94 is positioned adjacently to rotor 18 when rotor blade 22 is mounted on wind turbine 10. In particular, as illustrated in Figures 6 and 8, reinforcement element 94 may abut blade coupling assembly 92 or, more specifically, a respective pitch bearing 96.

According to at least some embodiments, reinforcement element 94 includes at least one coupling device configured for coupling blade root portion 24 to blade coupling assembly 92. Thereby, reinforcement element 94 may be configured as a joint flange. Typically, the at least one coupling device in reinforcement element 94 may include coupling holes 95 to enable coupling of rotor blade 22 to blade coupling assembly 92 as described below. The at least coupling device in reinforcement element 94 may include any suitable element or elements for enabling direct fastening of reinforcement element 94 to blade coupling assembly 92 such as an array of threads. In at least some embodiments, such as those shown in Figures 6 and 7, the reinforcement element does not require a coupling device, such as coupling holes 95, to enable coupling of rotor blade 22 to blade coupling assembly 92.

Figure 6 shows a configuration of wind turbine 10, in which reinforcement element 94 is positioned adjacent to blade coupling assembly 92 or, more specifically, to pitch bearing 96. In particular, Figure 6 shows a cross-sectional view of an area of wind turbine 10 including blade root portion 24 and a portion of blade coupling assembly 92. Blade root portion 24 includes reinforcement element 94. In the exemplary embodiment, reinforcement element 94 is a flange having a ring form and including a rim 130 and a central aperture 132. Thereby, reinforcement element 94 may facilitate a sufficient stiffening of blade coupling assembly 92 while keeping weight of rotor blade 22 low. Alternatively, reinforcement element 94 may be a solid flange with no aperture provided therein. Thereby, reinforcement element 94 may facilitate a further stiffening of blade coupling assembly 92. According to other embodiments, reinforcement element 94 may be constituted by portions of a flange, for example as annular portions of a flange disposed in blade root portion 94. Alternatively, or in addition thereto, blade root portion 94 may include a plurality of flanges disposed along a longitudinal axis 34 of rotor blade 22.

Reinforcement element 94 may be coupled in a fixed manner to blade main body 114 at an interface 120. For example, but not limited thereto, reinforcement element 94 may be fixed to blade main body 114 by providing an appropriate adhesive, such as an epoxy adhesive, at interface 120.

Blade 22 may be coupled to blade coupling assembly 92, which includes hub 20 and pitch bearing 96, by: (i) disposing reinforcement element 94 adjacent to inner ring 100 of pitch bearing 96; and, (ii) fixing blade 22 to inner ring 100 through fastening elements 122. Fastening elements 122 may be disposed through holes 75 of inner ring 100 and holes 95 of reinforcement element 94 and fastened to blade root fixings 118. Fastening elements 122 may be any suitable elements which enable an appropriate fixing of blade 22 to pitch bearing inner ring 100 such as, but not limited to, bolts or screws. In the latter case, blade root fixings 118 may be an array of threads disposed in a perimeter of blade main body 114.

According to at least some embodiments herein, rotor blades are not coupled to blade coupling assembly 92 through reinforcement element 94, as exemplified in Figures 7 and 8. In the exemplary embodiment of Figure 7, reinforcement element 94 is fixed to an end section of blade root portion 24 by fastening elements 124. Fastening elements 124 may be, for example, a plurality of bolts or threads. Fastening elements 124 may be disposed through holes 142 provided in reinforcement element 94. In such embodiments, it is typical to provide blade root portion 24 with an additional portion 144 adapted to facilitate a solid coupling of reinforcement element 94 to blade root portion 24. Typically, additional portion 144 extends toward the longitudinal axis of rotor blade 22. Typically, additional portion 144 includes couplings 128, which may be, for example, but not limited to, an array of threads.

Alternatively or in addition to fastening elements 124, reinforcement element 94 may be fixed to blade root portion 24 at an interface 126 formed between blade root portion 24 and reinforcement element 94. In particular, reinforcement element 94 may be fixed to blade root portion 24 by providing an adhesive, such as an epoxy, at interface 126. Alternatively or in addition thereto, reinforcement element 94 may be welded to blade root portion 24.

In at least some of the embodiments herein, such as embodiments in Figures 5 to 7, reinforcement element 94 is integrally formed in rotor blade 22 by: (i) having a shape complementary to the end section of blade root portion 24, and (ii) being fixed thereto. The present disclosure contemplates additional embodiments for providing a reinforcement element integrally formed in blade root portion 24.

In the exemplary embodiment shown in Figure 8, an exemplary reinforcement element 94 is integrally formed in blade root portion 24 by forming reinforcement element 94 in a single piece with rotor blade main body 114. In this exemplary embodiment, reinforcement element 94 is a portion of blade main body 114 having a ring form and extending across a radial cross-section of rotor blade 22. In this exemplary embodiment, and at least some embodiments herein, reinforcement element 94 includes a central aperture 132.

This exemplary reinforcement element 94 may be formed with the same material as blade main body 114 or with a different material thereof. For example, a reinforcement element according to embodiments herein may include a material selected from the group consisting of aramid (e.g., kevlar^{™}), casting, fiber reinforced plastic, a glass/polyester ply, a glass/epoxy ply, a glass/polyester laminate, a carbon fiber/epoxy ply, a khaya ivorensis/epoxy laminate, steel (e.g., a high yield steel), aluminum (e.g., a weldable aluminum alloy), or any combination thereof.

As shown in the exemplary embodiments of Figures 7 and 8, and according to embodiments herein, a reinforcement element according to the present disclosure is integrated into a blade root portion. In particular, according to at least some embodiments herein, a reinforcement element is integrated into a blade root portion such that a portion of the main body of the rotor blade surrounds, at least partially, the reinforcement element.

According to at least some embodiments herein, reinforcement element 94 may be a flange. In particular, reinforcement element 94 may be, for example, but not limited to, a projecting rim, collar, or ring disposed in blade root portion 24 for stiffening blade coupling assembly 92 of rotor 20 according to the present disclosure. Such a flange may be disposed in blade root portion 24 by, for example, but not limited to, casting, welding, gluing through an appropriated adhesive (such as an epoxy), or through fastening devices such as bolts or screws.

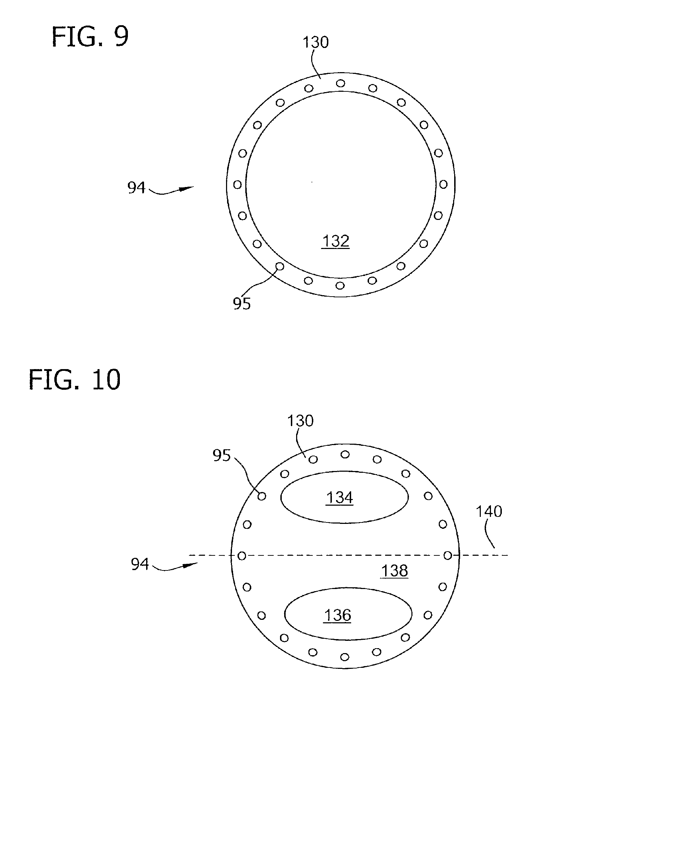

Figures 9 and 10 show exemplary reinforcement elements 94 according to the present disclosure. The exemplary reinforcement element 94 in Figure 9 has an annular form and includes an external rim 130 and a central aperture 132. The exemplary reinforcement element 94 in Figure 10 is a semi-blind flange including an external rim 130 connected by a middle portion 138. More specifically, a semi-blind flange includes a external rim 130, at least two middle apertures 134, 136 at middle regions of the flange, and a middle solid portion 138, which connects two portions of rim 130. Typically, middle apertures 134, 136 are disposed symmetrically relative to a longitudinal axis 140 of middle solid portion 138.

Typically, a reinforcement element 94 in the form of a flange and providing one or more middle apertures (as in the previous examples) facilitate a sufficient stiffening of blade coupling assembly 92 while keeping the total weight of rotor blade 22 low. A reinforcement element in the form of a flange may provide coupling holes 95 to enable coupling of rotor blade 22 to blade coupling assembly 92 as described above. Further, the flange may include holes 142 (shown in Figure 7) for enabling fastening of the flange to main body 114 of rotor blade 22.

According to at least some embodiments herein, the flange is a joint flange configured for coupling blade root portion 24 to blade coupling assembly 92. For example, the flange may be glued to the main body of rotor blade 22 and provide fastening devices (such as threads) for enabling coupling of rotor blade 22 to blade coupling assembly by fastening the flange to the assembly through, for example, bolts or screws.

Reinforcement element 94 may be made of any material suitable for enabling an adequate stiffening of blade coupling assembly according to embodiments herein. For example, but not limited to, reinforcement element 94, in particular when constituted as a flange, may include a material selected from the group consisting of aramid (e.g., kevlar^{™}), casting, fiber reinforced plastic, a glass/polyester ply, a glass/epoxy ply, a glass/polyester laminate, a carbon fiber/epoxy ply, a khaya ivorensis/epoxy laminate, steel (e.g., a high yield steel), aluminum (e.g., a weldable aluminum alloy), or any combination thereof.

Typically, the shape, composition and/or placement of reinforcement element 94 are chosen for increasing the stiffness of blade coupling assembly 92 to a pre-determined level. According to embodiments herein, stiffness of blade coupling assembly 92 refers to the resistance of assembly 92, or elements thereof, to deformation by an applied load along given directions. Typically, stiffening refers to an increase of stiffness of the assembly or of at least one element thereof, such as pitch bearings 96 and/or hub 20.

Typically, a stiffness of a blade coupling assembly according to embodiments herein depends on the boundary conditions at which it is subjected. In particular, the stiffness may depend on the mechanical properties of a blade root portion including a reinforcement element, as described herein, and coupled to a blade coupling assembly according to the present disclosure. According to embodiments herein, the mechanical properties of the reinforcement element are such that blade coupling assembly or, more specifically a pitch bearing therein, has a pre-determined stiffness. For example, reinforcement element 94 may be configured such that it induces an increase of 10 % in stiffness of the blade coupling assembly or, more specifically of a pitch bearing therein. According to at least some embodiments, this stiffness increase may be of, at least 20% or, more specifically, of at least 30%. This stiffness increase is considered as relative to a blade coupling assembly coupled to a blade root portion not including the reinforcement element.

The stiffness may be quantified by considering the resistance offered by an element or group of elements in the blade coupling assembly to deformation. In particular, the stiffness may be quantified at a pitch bearing in the assembly. The stiffness may be considered as being the ratio of: (a) a load exerted through the rotor blade to the blade coupling assembly in a given direction, and (b) the deformation of the blade coupling assembly, or of an individual element thereof such a pitch bearing therein, in the given direction.

A least some embodiments herein provide a rotor blade including a reinforcement element for increasing the rotational stiffness of the blade coupling assembly or, more specifically of a pitch bearing therein. The rotational stiffness refers to the ratio of: (a) a moment applied to the blade coupling assembly, in particular to a pitch bearing therein, through the rotor blade, and (b) a rotation produced through deformation of the blade coupling assembly or, more specifically of a pitch bearing therein. For example, reinforcement element 94 may be configured to induce an increase of at least 10 % in the rotation stiffness of the blade coupling assembly or, more specifically of a pitch bearing therein. According to at least some embodiments, this stiffness increase may be of, at least 20% or, more specifically, of at least 30%.

Embodiments herein contemplates a method of assembling wind turbine 10. The method may include coupling rotor blade 22 to rotor hub 20 through respective pitch bearing 96, so that rotor blade 22 is rotatable about a pitch axis 34. Rotor blade 22 includes reinforcement element 94 disposed in a blade root portion 24. Reinforcement element 94 is configured for stiffening the blade coupling assembly according to the present disclosure.

Exemplary embodiments of systems and methods for a rotor blade for use with a wind turbine, a wind turbine, and assembling of the wind turbine are described above in detail. The systems and methods are not limited to the specific embodiments described herein, but rather, components of the systems and/or steps of the methods may be utilized independently and separately from other components and/or steps described herein. For example, the rotor blades described above may also be used in combination with other pitch assemblies or blade coupling assemblies, and are not limited to practice with only the wind turbine systems as described herein. Rather, the exemplary embodiment can be implemented and utilized in connection with many other rotor blade applications.

Although specific features of various embodiments of the invention may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A rotor blade adapted for use with a rotor of a wind turbine, the rotor blade comprising:
(a) a blade root portion adapted for, in use, transferring a load acting on the blade to said rotor through a blade coupling assembly of said rotor, said blade coupling assembly including a rotatable hub and a pitch bearing; and,
(b) at least one reinforcement element disposed in said blade root portion of said rotor blade for stiffening said blade coupling assembly of said rotor.

2. A rotor blade according to claim 1, wherein said at least one reinforcement element is a flange.

3. A rotor blade according to claim 2, wherein said flange is a semi-blind flange.

4. A rotor blade according to claim 2, wherein said flange is a joint flange including coupling devices configured for coupling said blade root portion to said blade coupling assembly.

5. A rotor blade according to claim 1, wherein said at least one reinforcement element is integrated into said blade root portion.

6. A rotor blade according to claim 1, wherein said reinforcement element is disposed for forming the boundary of said blade root portion configured to be disposed proximal to said blade coupling assembly when said rotor blade is mounted on said wind turbine.

7. A wind turbine, comprising:
(a) a tower;
(b) a nacelle coupled to said tower;
(c) a rotor rotatably coupled to said nacelle, said rotor including a blade coupling assembly including a rotor hub and at least one pitch bearing coupled to said rotor hub; and,
(d) at least one rotor blade coupled to said rotor hub through said at least one pitch bearing at a blade root portion, so that said at least one rotor blade is rotatable about a pitch axis,
wherein said at least one rotor blade includes at least one reinforcement element disposed in said blade root portion such that said at least one reinforcement element stiffens said blade coupling assembly.

8. A wind turbine according to claim 7, wherein said at least one reinforcement element is configured to increase stiffness of the at least one pitch bearing.

9. A wind turbine according to claim 7, wherein said reinforcement element is configured to increase stiffness of the at least one pitch bearing by at least 10 %.

10. A wind turbine according to claim 7, wherein said at least one reinforcement element is disposed adjacently to said blade coupling assembly.

11. A wind turbine according to claim 7, wherein said at least one reinforcement element is a flange.

12. A wind turbine according to claim 11, wherein said flange is a semi-blind flange.

13. A wind turbine according to claim 11, wherein said flange is a joint flange coupling said blade root portion to said blade coupling assembly through coupling devices.

14. A wind turbine according to claim 7, wherein said at least one reinforcement element is integrated into said blade root portion.

15. A method of assembling a wind turbine with a rotor, the rotor including a rotor hub and at least one pitch bearing coupled to said rotor hub, said rotor hub and said at least one pitch bearing forming part of a blade coupling assembly for coupling at least one rotor blade to said rotor, said method comprising:
coupling one of said at least one rotor blade to said rotor hub through a pitch bearing, so that said at least one rotor blade is rotatable about a pitch axis,
wherein said at least one rotor blade includes at least one reinforcement element disposed in said blade root portion; and,
said at least one reinforcement element stiffens said blade coupling assembly when said at least one rotor blade is coupled to said rotor hub.

16. The method according to claim 15, wherein said reinforcement element is configured to increase stiffness of the respective pitch bearing by at least 10 %.

17. The method according to claim 15, wherein said at least one reinforcement element is a flange.

18. The method according to claim 15, wherein said flange is a semi-blind flange.

19. The method according to claim 18, wherein said flange is a joint flange configured for coupling said blade root portion to said blade coupling assembly.

20. The method according to claim 18, wherein said at least one reinforcement element is integrated into said blade root portion.
